# EUROPEAN PATENT APPLICATION

(11) **EP 0 915 430 A1**
(43) Date of publication of application: **12.05.1999**
(21) Application number: 97308969.1
(22) Date of filing: 07.11.1997
(51) Int. Cl.: G06K 13/08, G06K 7/00, H01R 13/629

(54) **Flat improved flat connector for receiving a cassette memory for an expansion card**

(71) Applicant: Yao, Li-ho, Taipei (TW)
(72) Inventor: Yao, Li-ho, Taipei (TW)
(74) Representative: Miller, James Lionel Woolverton

(57) **Abstract**

A flat connector (20) for receiving a cassette memory for a expansion card comprises a chamber (25) into which a cassette memory (30) may be easily and smoothly inserted through an inlet opening (252). The flat connector (20) includes a plurality of outturned blades (231, 232) arranged around the inlet opening (252) to accurately guide the cassette memory into the flat connector.

## Description

The present invention relates to an expansion card for a notebook computer, more particularly, to a flat connector for receiving a cassette memory for the expansion card adapted to the notebook computer.

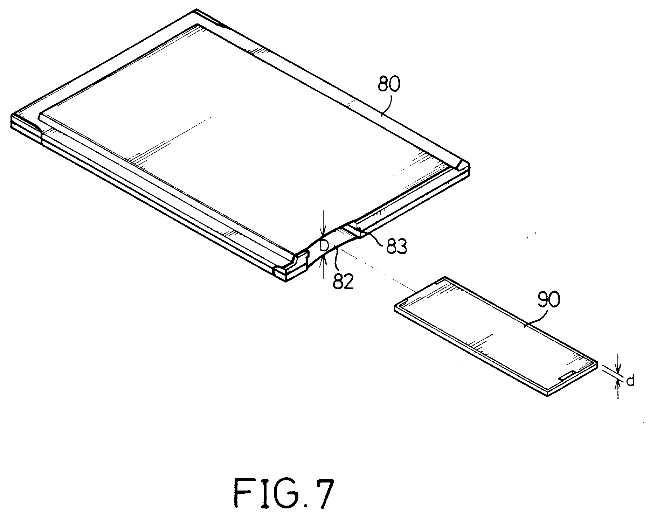

Referring to Fig. 7, an expansion card 80 for a notebook computer is shown. The expansion card, which is sized as a name card, defines a slot 82 for a cassette memory 90 to insert to connect with a flat connector (not shown) disposed on a circuit board (not shown) inside the expansion card 80. Electrical connection and signal connection between the cassette memory 90 and the circuit board of the expansion card are accomplished via the flat connector. However, there is a problem exists.

As can be seen from this drawing, the highness "D" of the slot 82 is much larger than the thickness "d" of the cassette memory 90, so that the cassette memory is difficult to accurately insert into the flat connector inside the expansion card 80.

Although a pair of leading grooves 83 are defined on both side walls of the slot 82, respectively, to lead the cassette memory 90 to insert into the flat memory, the grooves 83 extend inward for just a limited distance. It is difficult for the cassette memory 90 to be smoothly inserted into the flat connector via the slot 82 and the grooves 83.

One object of the present invention is to provide an improved flat connector an expansion card, into which a cassette memory can be smoothly and easily inserted.

In accordance with one aspect of the present invention, the flat connector comprises a plurality of outturned blades formed around an opening thereof to lead the cassette memory to be accurately inserted in the flat connector.

Other objects, advantages and novel features of the invention will become more apparent from the following detailed description when taken in conjunction with the accompanying drawings.

### IN THE DRAWINGS

Fig. 1 shows an expansion card having a flat connector in accordance with the present invention;
Fig. 2 shows the expansion card having the flat connector of Fig. 1, wherein an upper cover of the flat connector is separated therefrom;
Fig. 3 is a bottom perspective exploded view showing the structure of the flat connector in accordance with the present invention;
Fig. 4 is a rear sectional diagram of the flat connector in accordance with the present invention;
Fig. 5 is a side sectional diagram showing a cassette memory to be inserted into the flat connector in accordance with the present invention;
Fig. 6 is a side sectional diagram showing the cassette memory is inserted in the flat connector in accordance with the present invention; and
Fig. 7 shows an expansion card and a cassette memory to be inserted thereto.

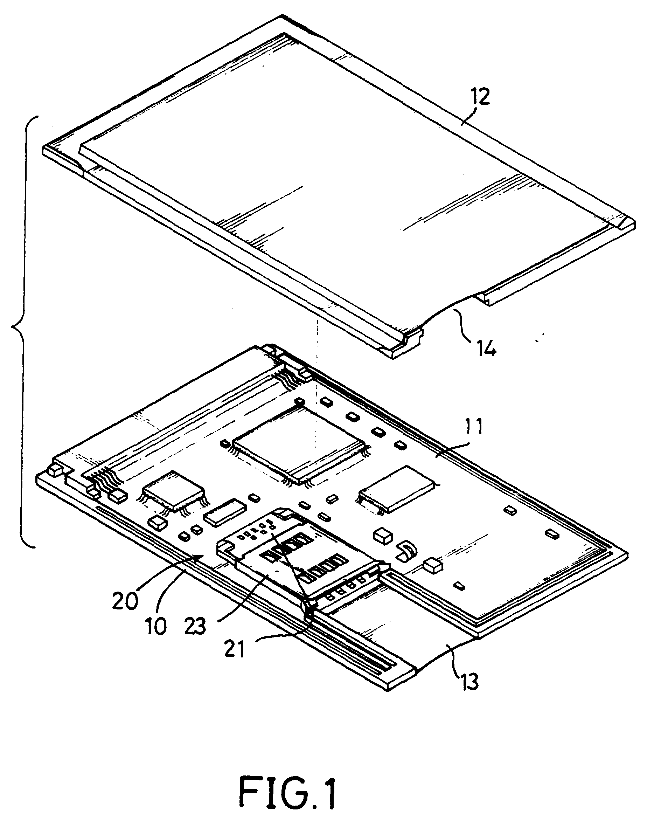

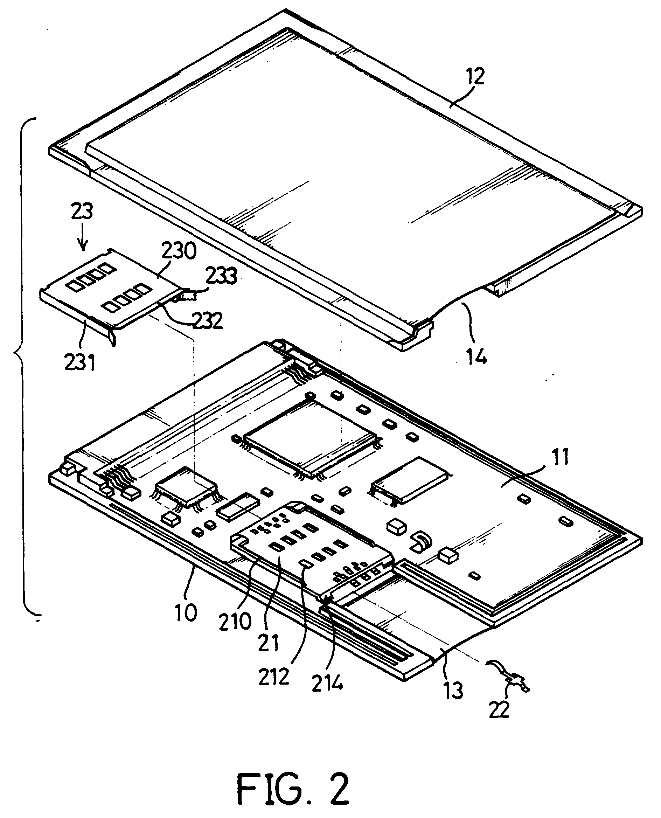

Referring to Figs. 1, 2, 3, 5, and 6, an expansion card adapted for a notebook computer comprises a base plate 10, a circuit board 11 provided on the base plate 10, and a lid plate 12 to be combined with the base plate 10 to enclose the circuit board 11.

The base plate 10 has a recess 13 defined at one side, and the lid plate 12 also has a recess 14 defined at a position corresponding to the recess 13. The recess 13 and the recess 14 define a slot for a cassette memory 30 to insert when the base plate 10 is combined with the lid plate 12.

A flat connector 20 in accordance with the present. invention is provided on the circuit board 11 at an end of the recess 13 as known. The cassette memory 30 can be electrically connected with circuits of the circuit board 11 via the flat connector 20 when the cassette memory 30 is inserted into the flat connector 20.

The flat connector 20 in accordance with the present invention comprises a seat 21, a plurality of terminals 22 provided on the seat 21, and an upper cover 23. The upper cover 23 is engaged with the seat 21 to define a chamber 25 therebetween for the cassette memory 30 to extend into. For the sake of convenience for description, an opening of the chamber 25, from which the cassette memory 30 extend thereinto, is referred to an inlet opening 252.

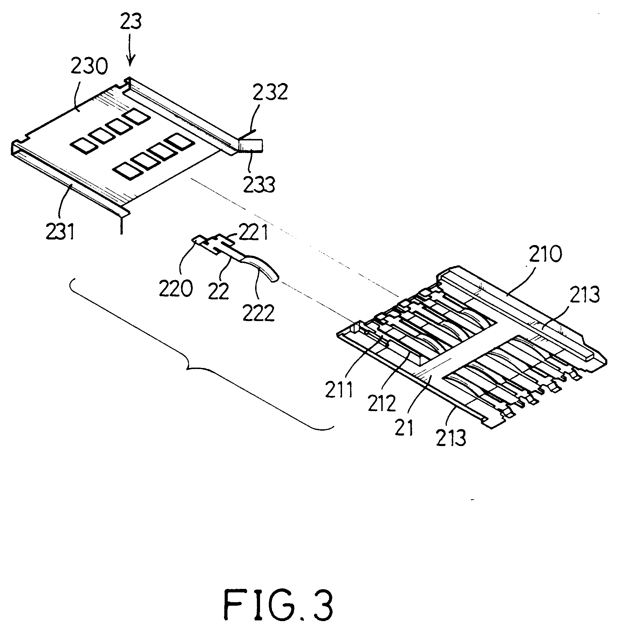

As shown in Fig. 3, which is a exploded bottom perspective view of the flat connector 20, the seat 21 has eight elongated recesses 211 defined in a bottom surface thereof, and eight through holes 212 defined in the elongated recesses 211, respectively. In this embodiment, the flat connector 20 has eight terminals 22 disposed in the elongated recesses 211.

Each of the terminals 22 comprises a lead end 220, a neck portion 221 and a curved portion 222. When the terminal 22 is disposed in one of the recesses 221 at the bottom of the seat 21, the grid-like neck portion 221 is used to engage with the seat 21, and the curved portion 222 thereof is exposed and protruded out of the through hole 212. The terminals 22 are electrically connected to circuits on the circuit board 11. The arrangement of the terminals 22 is well known by those persons with ordinary skills in this art, and therefore the detailed description thereof is omitted herein.

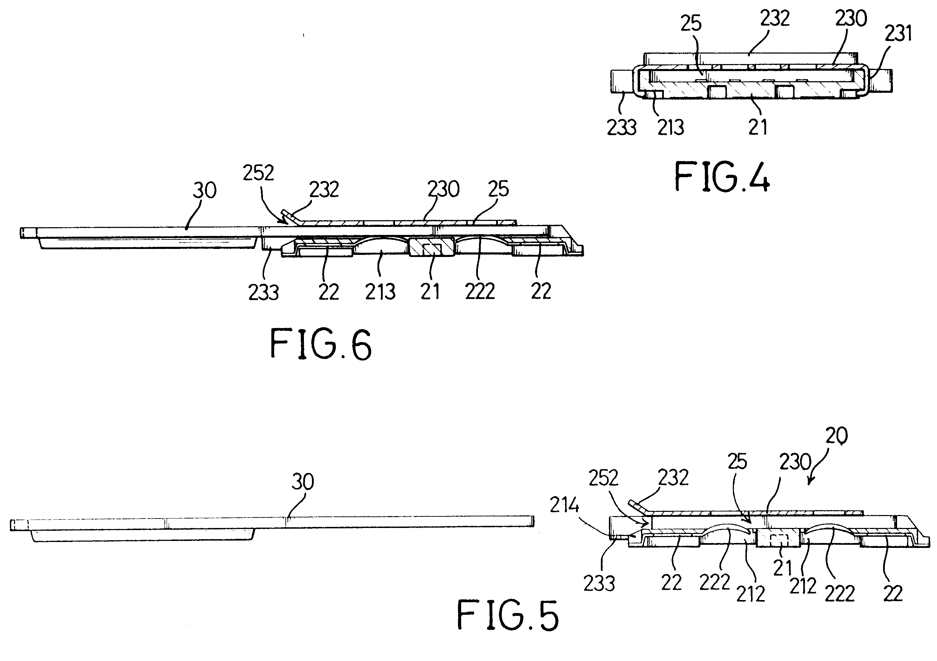

As shown in Figs. 5 and 6, the curved portions 222 of the respective terminals 22 contact with contacts (not shown) of the cassette memory 30 when the cassette memory 30 inserts between the seat 21 and the upper cover 23.

The seat 21 has a fringe 210 formed at each of two sides at a top surface thereof and a groove 213 defined in the bottom thereof at each of the two sides. The upper cover 23 has a top sheet and two side stripes 230, each of which has an L-like section, respectively formed at both sides of the top sheet. The two side stripes are slidably received in the two grooves 213 of the seat 21, respectively, when the upper cover 23 is mounted to the seat 21.

Further referring to Fig. 4 in conjunction with the above drawings, the upper cover 23, which is made of metal, of the flat connector 20 in accordance with the present invention has an upper outturned blade 231 formed on an edge of the upper cover 23 and two side outturned blades 232 formed on respective ending edges of the two stripes 230. The outturned blades 231 and 232 are arranged around the inlet opening 252 of the chamber 25 defined by the seat 21 and the upper cover 23. The seat 21 also has two slants 214 formed adjacent to two side edges of the seat 21, respectively, at a front end thereof defining the inlet opening 252. The outturned blades 231, 232 and the slants 214 function together to lead the cassette memory 30 to accurately and smoothly inserted into the flat connector 20.

Although the highness of the slot defined by the recesses 13 and 14 in the case that the base plate 10 and the lid plate 12 of the expansion card are combined is much larger than the thickness of the cassette memory 30, the cassette memory 30 can be accurately inserted into the flat connector 20 disposed in the expansion card, since the outturned blades 231, 232 as well as the slants 214 barricade force the cassette memory 30 to precisely extend into the flat connector 20.

It is to be understood, however, that even though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A flat connector for receiving a cassette memory for an expansion card comprising:
a seat;
a plurality of terminals disposed on the seat for and electrically connecting with circuits of the expansion card, and contacting contacts of the cassette memory when the cassette memory inserts into the flat connector; and
an upper cover engaged with said seat to define a chamber for receiving the cassette memory, said chamber has an inlet opening defined by a first edge of said upper cover and a second edge of said seat for the cassette memory to extend through, said upper cover has at least one outturned blade formed at said first edge to lead the cassette memory to accurately insert into the flat connector.

2. The flat connector as claimed in Claim 1, wherein said first edge is inverse U-like.

3. The flat connector as claimed in Claim 2, wherein said upper cover has an upper outturned blade formed at an upper portion of said first edge.

4. The flat connector as claimed in Claim 2, wherein said upper cover has two side outturned blade formed at side portions of said first edge.

5. The flat connector as claimed in Claim 2, wherein said upper cover has an upper outturned blade and two side out-turned blades formed at an upper portion and side portions of said first edge, respectively.

6. The flat connector as claimed in Claim 1, wherein said seat has two grooves defined in a bottom thereof at both sides, respectively, and said upper cover has an top sheet and two side stripes, each of which has an L-like section, formed respectively at two sides of said top sheet, said side stripes of the upper cover are slidably received in said respective grooves, so that the seat and the upper cover are engaged with each other.

7. The flat connector as claimed in claim 1, wherein said seat has two slants formed at two ends of said second edge of said seat defining said inlet opening.
